# EUROPÄISCHE PATENTSCHRIFT

(11) **EP 0 582 961 B1**
(45) Veröffentlichungstag und Bekanntmachung des Hinweises auf die Patenterteilung: **28.11.2001**
(21) Anmeldenummer: 93112509.0
(22) Anmeldetag: 04.08.1993
(51) Int. Cl.: G06K 7/10, G06K 7/08, G06K 19/07

(54) **Datenverarbeitungsvorrichtung mit Betriebsverfahren und bevorzugter Verwendung zur Werkstückidentifikation**
Date processing device with process and preferred use for workpiece identification
Dispositif de traitement de données avec procédé de fonctionnement et application préférentielle à l'identification de pièces

(30) Priorität: 14.08.1992 DE 4226993
(43) Veröffentlichungstag der Anmeldung: 16.02.1994
(73) Patentinhaber: SIEMENS AKTIENGESELLSCHAFT, 80333 München (DE)
(72) Erfinder: Knospe, Jürgen, Dipl.-Ing., D-90530 Wendelstein (DE)

(56) Entgegenhaltungen:
- EP-A- 0 125 143
- EP-A- 0 170 716
- WO-A-86/06303
- FR-A- 2 664 075
- GB-A- 2 180 424

## Beschreibung

Die Erfindung betrifft eine Datenverarbeitungsvorrichtung mit mindestens einer ortsfesten Schreib- und Leseeinrichtung zur kabellosen Datenübertragung und mindestens einer autarken Datenspeichervorrichtung mit internem Speicher gemäß dem Oberbegriff des Patentanspruches 1. Die Erfindung betrifft ferner ein Verfahren zum Betrieb einer derartigen Datenverarbeitungsvorrichtung und eine bevorzugte Verwendung derselben.

Bei autarken Datenspeichervorrichtungen mit internem Speicher muß besonders darauf geachtet werden, daß keine abgehenden Kabelverbindungen die freie Beweglichkeit und uneingeschränkte Mobilität über weite Strecken behindern. So wird die Datenübertragung zwischen der autarken Datenspeichervorrichtung und mindestens einer dazugehörigen, ortsfesten Schreib- und Leseeinrichtung in einer Datenverarbeitungsvorrichtung auf kabellose Weise bewerkstelligt. Hierzu dienen bevorzugt induktive Systeme mit Sende- und Empfangsantennen. Ebenso muß die Energieversorgung derartiger mobiler Datenspeichervorrichtungen ohne Zuhilfenahme von externen, störenden Kabelverbindungen erfolgen. Derartige Vorrichtungen sind im Rahmen von CIM (Computer Integrated Manufacturing) aus etz, 107 (1986), Seiten 858 ff. und Electronic 8 (1988), Seiten 10 ff. bekannt.

Beim Stand der Technik kann die Energieversorgung durch Batterien sichergestellt werden, welche in die autarke Datenspeichervorrichtung integriert sind. Eine solche vorrichtung wird in FR-A-2 664 075 dargestellt. Eine derartige Anordnung hat zwar den Vorteil, daß eine schnelle Datenübertragung auch über eine große Entfernung zwischen der autarken Datenspeichervorrichtung und einer dazugehörigen, ortsfesten Schreib- und Leseeinrichtung der Datenverarbeitungsvorrichtung möglich ist. Dies hat seine Ursache darin, daß eine batteriegespeiste, in die Datenspeichervorrichtung integrierte Energieversorgung nahezu kein Störfeld verursacht, welches eine schnelle Datenübertragung über größere Entfernungen beeinträchtigen könnte. Eine derartige Datenspeichervorrichtung weist jedoch aufgrund der kabellosen, bevorzugt induktiven Datenübertragung zur ortsfesten Schreib- und Leseeinrichtung einen hohen Energieverbrauch auf, welcher eine nur kurze Lebensdauer der integrierten Batterien zur Folge hat. Dies ist besonders dann von Nachteil, wenn bei der autarken Datenspeichervorrichtung besondere Maßnahmen zur Kapselung vorgesehen sind. Diese sind z.B. notwendig, wenn die Datenspeichervorrichtung gemeinsam mit einem Werkstück besonders belastende Verfahrensschritte in einem Ferti-gungsprozeß durchlaufen muß, z.B. Lackieranlagen, Galvanikbäder, Trockenöfen und dergleichen. In einem solchen Fall kann die autarke Datenspeichervorrichtung derart gekapselt sein, daß ein Öffnen derselben zum Zwecke des Austausches einer integrierten Batterie nur mit einem sehr großen Aufwand möglich ist. In einem solchen Fall ist es von einem Batterieaustausch abzusehen und der Einsatz der autarken Datenspeichervorrichtung muß selbst bei einer schnellen Erschöpfung der Kapazität der integrierten Batterie beendet werden.

Bei einer anderen Vorrichtung erfolgt die Energieversorgung der autarken Datenspeichervorrichtung auf induktivem Wege. Dabei wird der Datenspeichervorrichtung von einer dazugehörigen, ortsfesten Schreib- und Leseeinrichtung in der Datenverarbeitungsvorrichtung parallel zum Datenaustausch auch Energie auf induktivem Wege kabellos übertragen. In einem solchen Fall benötigt die Datenspeichervorrichtung zum Betrieb prinzipiell keine Batterie. Die Lebensdauer einer derartigen Datenspeichervorrichtung wird zwar nicht durch die Art der Energieversorgung beschränkt, doch ist eine störungsfreie Datenübertragung nur bei starker Annäherung an die Schreib- und Leseeinrichtung möglich. Ferner wird auch die Geschwindigkeit der Datenübertragung durch das von der induktiven Energieübertragung verursachte Störfeld begrenzt.

Aus der EP 0 125 143 ist ein Monitoring System für die Erfassung von Bewegungen von Objekten oder Personen bekannt, bei dem ein Detektor vorhanden ist und am Objekt ein entsprechendes Element, wobei die Erfassung der Signale über eine induktive Schnittstelle erfolgt. Die Energieversorgung erfolgt dabei über eine Batterie, die lediglich im Betriebszustand des Systems genutzt werden soll. Weiterhin ist aus der GB 21 80 424 A ein berührungsloses Identifikationssystem bekannt, das einen optoelektronischen Detektor aufweist, wobei bei dieser Schnittstelle die Energieversorgung über die Erfassung von Licht aktiviert wird. Schließlich ist aus der WO 86/06303 ein Steuersystem für mobile Transporteinheiten auf Transportstraßen bekannt, bei dem stationäre und mobile Steuermodule in der Weise zusammenarbeiten, daß im mobilen Steuermodul ein Ablaufprogramm vorhanden ist, das beim Vorbeibewegen am ortsfesten Steuermodul aktiviert werden kann. Es können in Abhängigkeit von der übertragenen Information Arbeitsvorgänge ausgelöst bzw. verhindert werden.

Der Erfindung liegt demgegenüber die Aufgabe zugrunde, eine Datenverarbeitungsvorrichtung der obengenannten Art derart weiter auszubilden, daß eine schnelle, störungsfreie Datenübertragung auch bei großem Abstand zwischen autarker Datenspeichervorrichtung und dazugehöriger ortsfester Schreib-und Leseeinrichtung möglich ist, und dennoch eine lange Lebensdauer von in der Datenspeichervorrichtung integrierten Batterien erreicht wird.

Die Aufgabe wird durch die Gesamtheit der Merkmale des Patentanspruches 1 gelöst. Vorteilhafte Ausgestaltungen, ein besonders vorteilhaftes Verfahren zum Betrieb der erfindungsgemäßen Vorrichtung und deren bevorzugte Verwendungen sind in den Unteransprüchen angegeben.

Mit der Erfindung wird die von Batterien bereitgestellte Energie in optimaler Weise genutzt. Es konnten gegenüber dem Stand der Technik Verlängerungen der Standzeiten um bis zum Faktor 5 erreicht werden. Damit ist die Praxistauglichkeit erheblich verbessert.

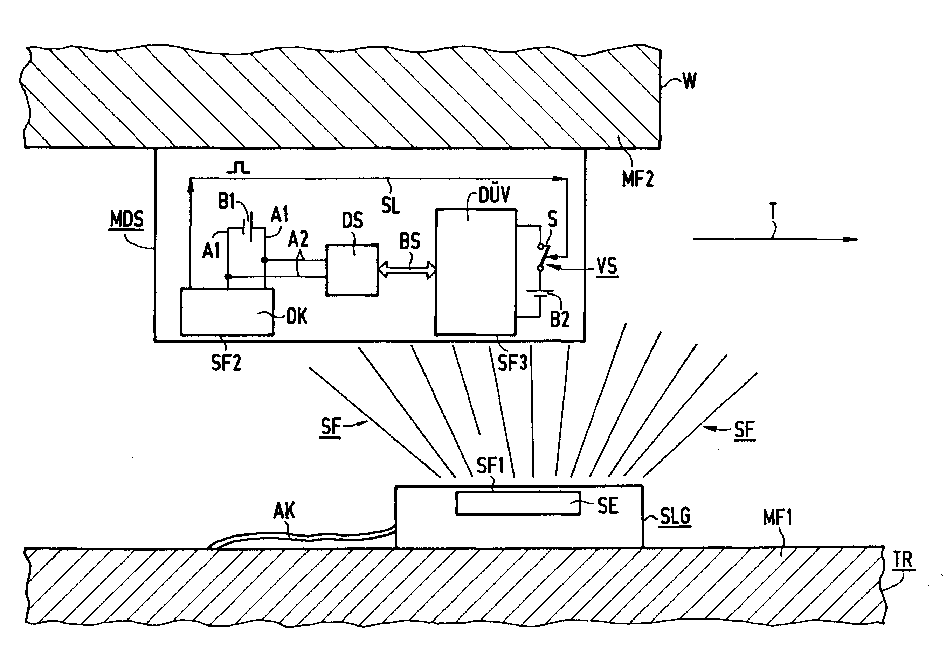

Die Erfindung und alle bevorzugten Ausführungsformen werden anhand eines in der beiliegenden Figur dargestellten Ausführungsbeispieles desweiteren näher erläutert.

Die in der Figur dargestellte Datenverarbeitungsvorrichtung weist mindestens eine ortsfeste Schreib- und Leseeinrichtung SLG und mindestens eine autarke, uneingeschränkt über weite Wegstrecken mobile Datenspeichervorrichtung MDS auf. Die Schreib- und Leseeinrichtung SLG ist dabei stationär bevorzugt auf einer ersten Montageoberfläche MF1 eines ortsfesten Objektes TR fixiert. Sie bildet ein Übertragungsfeld SF zur kabellosen Übertragung von Daten eines Übertragungsfeldes SF zur Datenspeichervorrichtung MDS. Hierzu ist bevorzugt eine Sende- und Empfangseinheit SE in der Einrichtung SLG vorhanden, welche bevorzugt mit Sende- und Empfangsantennen das Übertragungsfeld SF über eines erste Sensorfläche SF1 speist.

Bei dem in der Figur dargestellten Beispiel ist die Datenspeichervorrichtung MDS an einer zweiten Montageoberfläche MF2 eines in Laufrichtung T beweglichen Werkstückes W angebracht. Eine kabellose Datenübertragung ist in diesem Fall dann möglich, wenn sich das Werkstück W gemeinsam mit der aufgesetzten Datenspeichervorrichtung MDS auf seinem Wege T ausreichend an die ortsfeste Schreib- und Leseeinrichtung LSG auf dem ortsfesten Objekt TR angenähert hat. Hierzu verfügt die Datenspeichervorrichtung über eine Verarbeitungseinheit DÜV, welche den kabellosen Datenaustausch zwischen einem internen Speicher DS und der Schreib- und Leseeinrichtung SLG über das zwischenliegende Übertragungsfeld SF bevorzugt auf induktivem Wege bewirkt.

Erfindungsgemäß weist die Datenspeichervorrichtung MDS der anmeldungsgemäßen Datenverarbeitungsvorrichtung einen Detektor DK auf, welcher von einer integrierten ersten Batterie B1 mit einer bevorzugt kleinen bis mittleren Kapazität mit Energie versorgt wird. Erfindungsgemäß spricht der Detektor DK an, wenn die Datenspeichervorrichtung MDS sich ausreichend an das Übertragungsfeld SF einer Schreib- und Leseeinrichtung SLG angenähert hat bzw. in dieses eingetreten ist. Hierdurch wird ein schaltbarer Versorgungsstromkreis VS aktiviert, welcher aus einer zweiten Batterie B2 mit bevorzugt mittlerer bis großer Kapazität und einer Schalteinrichtung S besteht, und der zumindest die Verarbeitungseinheit DÜV für die Dauer eines Datenaustausches mit der Schreib- und Leseeinrichtung SLG an die zweite Batterie B2 anschaltet.

Eine derartige Anordnung hat den Vorteil, daß die Verarbeitungseinheit DÜV die zweite Batterie B2 nur dann mit einem u.U. hohen Strom belastet, wenn die Datenspeichervorrichtung MDS sich innerhalb der Reichweite des Übertragungsfeldes SF befindet und mit der Notwendigkeit eines Datenaustausches zwischen MDS und SLG zu rechnen ist. Ist dagegen die autarke Datenspeichervorrichtung MDS z.B. gemeinsam mit einem tragenden Werkstück W weit von einer Schreib- und Leseeinrichtung SLG entfernt, und somit ein Datenaustausch weder notwendig noch möglich, so wird erfindungsgemäß der Versorgungsstromkreis VS zur Erhaltung der Lebensdauer der zweiten Batterie B2 durch Öffnen der Schalteinrichtung S wieder von der Verarbeitungseinheit DÜV getrennt und diese vollständig deaktiviert. Von den elektischen Bauelementen im Inneren der Datenspeichervorrichtung MDS ist in diesem Fall lediglich der Detektor DK aktiv, welcher über die erste Batterie B1 mit Ruhestrom versorgt wird. Da der Stromverbrauch des Detektors nur sehr gering ist, ist trotz dieses Dauerstromes mit einer langen Lebensdauer der ersten Batterie B1 und Nutzungsdauer der gesamten Datenspeichervorrichtung MDS zu rechnen. Vielmehr erreicht auch die zweite Batterie B1 aufgrund der erfindungsgemäßen nur bedarfsweisen Zuschaltung der an die Verarbeitungseinheit DÜV bei Eintritt in ein Übertragungsfeld SF eine mit der ersten Batterie B1 vergleichbare, lange Lebensdauer. Die Erfindung ermöglicht somit eine autarke, in die mobile Datenspeichervorrichtung MDS integrierte Energieversorgung, welche ohne Batterienwechsel eine lange Einsatzdauer der Datenspeichervorrichtung MDS ermöglicht und dennoch den Datenaustausch zwischen Datenspeichervorrichtung MDS und einer ortsfesten Schreib- und Leseeinrichtung SLG nahezu nicht beeinträchtigt. Die Daten können somit ohne Gefahr eines Datenverlustes sehr schnell und über größere Entfernungen übertragen werden. Es ist somit nicht notwendig, daß nach Eintritt der Datenspeichervorrichtung MDS in das Ubertragungsfeld SF die Sensorfläche SF3 auf der Außenseite der Verarbeitungseinheit DÜV stark an die Sensorfläche SF1 auf der Außenseite der Sende- und Empfangseinheit SE in der Schreib- und Leseeinrichtung SLG angenähert wird.

Gemäß einer weiteren, in der Figur bereits dargestellten Ausführungsform geht der Detektor DK bei Eintritt in ein Übertragungsfeld SF auf einer Steuerleitung SL einen Einschaltimpuls SL zur Aktivierung der Schalteinrichtung S im schaltbaren Versorgungsstromkreis VS ab. Die Schalteinrichtung S weist bevorzugt selbsthaltende Eigenschaften auf. Dies hat zur Folge, daß sie nach Aktivierung durch einen Impuls SL für die Dauer eines Datenaustausches zwischen der Verarbeitungseinheit DÜV und einer Schreib- und Leseeinrichtung SLG eingeschaltet bleibt, und sich nach Beendigung des Datenaustausches selbsttätig wieder öffnet.

Gemäß einer weiteren Ausführungsform weist die Datenspeichervorrichtung MDS einen separaten internen Speicher DS auf, welcher über eine Busschnittstelle BS an die Verarbeitungseinheit DÜV angekoppelt ist. Diese kann im internen Speicher DS von einer Schreib- und Leseeinrichtung SLG übertragene Daten temporär hinterlegen, d.h. z.B. bis zum Erreichen des Übertragungsfeldes einer weiteren Schreib- und Leseeinrichtung. Zur Datenerhaltung ist eine separate Stromversorgung für den internen Speicher DS meist nicht erforderlich. Falls der verwendete Speicherbausteintyp dennoch eine Ruhestromversorgung erforderlich macht, kann diese auf einfache Weise durch Ankopplung des Speichers DS an die erste Batterie B1 über zweite Anschlußleitungen A2 erfolgen. Auch eine derartige weitere Stromentnahme aus der ersten Batterie B1 schränkt deren Lebensdauer nur unwesentlich ein.

Bevorzugt weist die erfindungsgemäße Datenverarbeitungsvorrichtung einen übergeordneten Leitrechner auf, welcher die Aufgaben einer zentralen Datenhaltung- und Verwaltung übernimmt, und gegebenenfalls auch als Schnittstelle zum Bedienpersonal dient. In einem solchen Fall ist die mindestens eine ortsfeste Schreib- und Leseeinrichtung SLG über ein Anschlußkabel AK an den zentralen Leitrechner angeschlossen. Hierüber kann auch die Stromversorgung von SLG erfolgen.

Die Erfindung betrifft ferner ein Verfahren zum Betrieb der Datenverarbeitungsvorrichtung. Dabei sendet die Schreib- und Leseeinrichtung MDS zyklisch ein sogenanntes Startdatentelegramm ab, solange sich keine Datenspeichervorrichtung MD in dem durch die Telegrammaussendung gebildeten Übertragungsfeld SF befindet. Das Startdatentelegramm stellt dabei bevorzugt den Anfang eines Übertragungsprotokolles dar und dient zur Aktivierung einer im Übertragungsfeld befindlichen Datenspeichervorrichtung. Ist dies nicht der Fall, so wird eine sich an das Startdatentelegramm anschließende Übertragungsroutine nicht durchlaufen, sondern das Startdatentelegramm nach einer Wartezeit erneut abgesendet.

Falls nun eine Datenspeichervorrichtung MDS in ein derart aufgebautes Übertragungsfeld SF eintritt, spricht erfindungsgemäß deren Detektor DK in der oben beschriebenen Weise an und aktiviert deren Verarbeitungseinheit DÜV durch Anschalten an den Versorgungsstromkreis VS. Die Verarbeitungseinheit DÜV ist nun in der Lage das Startdatentelegramm der Schreib- und Leseeinrichtung zu empfangen und auszuwerten. Bei einer derartigen Auswertung kann z.B. erkannt werden, von welcher Schreib- und Leseeinrichtung das Startdatentelegramm stammt, und ob eine Datenübertragung mit dieser Schreib- und Leseeinrichtung notwendig ist. Ist der Aufbau einer Datenbrücke zur Schreib- und Leseeinrichtung gewünscht, so signalisiert die Verarbeitungseinheit DÜV der Sende- und Empfangseinrichtung durch Übertragung eines Erkennungsdatentelegrammes die Bereitschaft zum Datenaustausch. Das Erkennuncsdatentelegramm kann dabei Informationen über Art und Nummer der Datenspeichervorrichtung MDS und gegebenenfalls eines damit verbundenen Werkstückes W beinhalten. Nun bricht die Schreib- und Leseeinrichtung MDS die Datenübertragung nicht mehr mit Absenden des Startdatentelegrammes ab, sondern setzt diese durch Bearbeitung der Übertragungsroutine fort.

Ein derartiges Verfahren hat den Vorteil, daß zur Aktivierung des Detektors DK in einer Datenspeichervorrichtung MDS bei Annäherung derselben an ein Übertragungsfeld SF kein spezielles Rufsignal vorgesehen ist. Vielmehr spricht dieser bereits bei Vorhandensein eines Übertragungsfeldes an, welches nur von der Verarbeitungseinheit DÜV selbst logisch interpretierbar ist. So löst z.B. das von der Schreib- und Leseeinrichtung zyklisch abgesendete Startdatentelegramm den Detektor DK aus und bewirkt gleichzeitig, daß die Datenspeichervorrichtung MDS nach Aktivierung und Auswertung des Startdatentelegrammes z.B. in Empfangsbereitschaft bzw. Sendebetrieb übergeht.

Eine Datenverarbeitungsvorrichtung der oben beschriebenen Art kann bevorzugt verwendet werden zur Kennzeichnung von Werkstücken zumindest nach Art und aktuellem Bearbeitungszustand für den Lauf durch eine Bearbeitungseinrichtung. Derartige Werstückidentifikationssysteme werden bevorzugt eingesetzt zur Produktdatenerfassung und Aktualisierung bei komplexen Fertigungsanlagen. Dabei muß ein Werkstück bis zu seiner endgültigen Fertigstellung eine Vielzahl von Bearbeitungsstationen im Inneren der Fertigungsanlage durchlaufen. Bei einem solchen System ist es notwendig, an jeder Stelle der Anlage jederzeit Kenntnis davon zu haben, welches Werkstück gerade durchläuft und in welchem aktuellem Bearbeitungszustand es sich befindet. Zu diesem Zweck wird jedem Werkstück W für den Lauf durch die Bearbeitungsvorrichtung eine eigene Datenspeichervorrichtung MDS zugeordnet. Diese durchläuft im "Huckepack" die Bearbeitungseinrichtung gemeinsam mit dem Werkstück.

Ferner ist bevorzugt einer jeden Bearbeitungsstation im Inneren einer derartigen Bearbeitungseinrichtung eine eigene Schreib- und Leseeinrichtung SLG zugeordnet, welche mit einem übergeordneten Leitrechner verbunden ist. Mit Erreichen bzw. mit Beendigung des Aufenthaltes eines Werkstückes in einer Bearbeitungsstation erfolgt dabei ein Datenaustausch der auf dem Werkstück aufsitzenden Datenspeichervorrichtung MDS mit der zur jeweiligen Bearbeitungsstation gehörigen, ortsfest angebrachten Schreib-und Leseeinrichtung SLG. Dieser Datenaustausch dient unter anderem dazu, dem Leitrechner zu signalisieren, daß das Werkstück die jeweilige Bearbeitungsstation erfolgreich passiert hat. Gleichzeitig kann der Datensatz im Inneren der Datenspeichervorrichtung MDS aktualisiert werden, wobei z.B. der nun erreichte Bearbeitungsgrad des Werkstückes eingetragen wird.

Die Zeiten, welche ein Werkstück mit aufsitzender mobiler Datenspeichervorrichtung MDS für den Transport zwischen den Bearbeitungsstationen der Bearbeitungseinrichtung und für den Aufenthalt in jeder Bearbeitungsstation benötigt, sind häufig viel länger als die Dauer des Datenaustausches zwischen Datenspeichervorrichtung MDS und den Schreib- und Leseeinrichtungen an jeder Bearbeitungsstation. Der Vorteil der Erfindung kommt gerade hierbei besonders zum Tragen, da auf diesen langen Wegen die Verarbeitungseinheit DÜV im Inneren einer jeden Datenspeichervorrichtung durch Abkoppeln von der zweiten Batterie B2 deaktiviert wird, und mit Hilfe des Detektors DK mit Erreichen einer Schreib- und Leseeinrichtung an einer Bearbeitungsstation der Fertigungsanlage nur noch kurzzeitig für die Dauer einer Datenübertragung eingeschaltet wird. Gemäß der Erfindung aufgebaute mobile Datenspeichervorrichtungen MDS können somit ohne Batterienwechsel für eine Vielzahl von Werkstückdurchläufen selbst durch eine sehr umfangreiche Bearbeitungseinrichtung mit einer Vielzahl einzelner Bearbeitungsstationen und mit langen Werkstückbearbeitungszeiten pro Bearbeitungsstation eingesetzt werden. Ist schließlich nach einer längeren Nutzungsdauer die Kapazität der beiden Batterien B1,B2 erschöpft, so können bereits benutzungsbedingte Beschädigungen insbesondere eines Gehäuses bzw. einer Kapselung der mobilen Datenspeichervorrichtung MDS eingetreten sein, so daß eine Entsorgung der gesamten Vorrichtung einem Batterienwechsel vorzuziehen ist.

## Patentansprüche

1. Datenverarbeitungsvorrichtung, mit
a) mindestens einer ortsfesten (TR,MF1) Schreib- und Leseeinrichtung (SLG) zur kabellosen Datenübertragung (SE;SF1,SF), und
b) mindestens einer autarken Datenspeichervorrichtung (MDS) mit internem Speicher (DS), mit
b1) einer Verarbeitungseinheit (DÜV) für den kabellosen Datenaustausch (SF3,SF) zwischen internem Speicher (DS) und Schreib- und Leseeinrichtung (SLG),
b2) einem Detektor (DK;SF2,SF), welcher bei Eintritt der Datenspeichervorrichtung (MDS) in das Übertragungsfeld (SF) der Schreib- und Leseeinrichtung (SLG) anspricht, und
b3) Mitteln zur Stromversorgung von Detektor (DK) und/ oder Verarbeitungseinheit (DÜV),
**dadurch gekennzeichnet, daß** die Mittel zur Stromversorgung sind:
b3.1) eine erste Batterie (B1) zur Stromversorgung des Detektors (DK) und
b3.2) ein schaltbarer Versorgungsstromkreis (VS) aus einer zweiten Batterie (B2) mit Schalteinrichtung (S), welcher durch Ansprechen des Detektors (DK) aktiviert wird und zumindest die Verarbeitungseinheit (DÜV) zumindest für die Dauer eines Datenaustausches (SF) mit der Schreib-und Leseeinrichtung (SLG) an die zweite Batterie (B2) anschaltet.

2. Vorrichtung nach Anspruch 1, wobei
a) der Detektor (DK) einen Impuls (SL) zur Aktivierung der Schalteinrichtung (S) erzeugt, und
b) die Schalteinrichtung (S) in Selbsthaltung für die Dauer eines Datenaustausches (SF) zwischen Verarbeitungseinheit (DÜV) und Schreib- und Leseeinrichtung (SLG) eingeschaltet bleibt, und anschließend sich selbsttätig deaktiviert.

3. Vorrichtung nach Anspruch 1 oder 2, wobei der interne Speicher (DS) bei Benötigung von Ruhestrom zur Datenerhaltung an die erste Batterie (B1) angeschlossen ist (A2).

4. Vorrichtung nach einem der vorangegangenen Ansprüche, wobei die mindestens eine Schreib- und Leseeinrichtung (SLG) an einen übergeordneten Leitrechner angekoppelt (AK) ist, welcher zur zentralen Datenverwaltung dient.

5. Verfahren zum Betrieb einer Datenverarbeitungsvorrichtung nach einem der vorangegangenen Ansprüche, wobei
a) die mindestens eine Schreib- und Leseeinrichtung (SLG) zyklisch ein Startdatentelegramm absendet, solange sich keine Datenspeichervorrichtung (MDS) im Übertragungsfeld (SF) befindet,
b) der Detektor (DK) in der mindestens einen Datenspeichervorrichtung (MDS) bei Eintritt in das Übertragungsfeld (SF) anspricht, und
c) die Verarbeitungseinheit (DÜV) nach Anschaltung an die zweite Batterie (B2) mittels Detektor (DK) und Schalteinrichtung (S) das Startdatentelegramm auswertet und der Sende- und Empfangseinrichtung (SLG) durch Übertragung eines Erkennungsdatentelegrammes die Bereitschaft zum Datenaustausch signalisiert.

6. Verwendung einer Datenverarbeitungsvorrichtung nach einem der Ansprüche 1 bis 4, zur Kennzeichnung von Werkstücken zumindest nach Art und aktuellem Bearbeitungszustand zu Beginn und während des Laufes durch eine Bearbeitungseinrichtung.

7. Verwendung nach Anspruch 6, wobei jedem Werkstück (W) für den Lauf durch die Bearbeitungseinrichtung eine eigene Datenspeichervorrichtung (MDS) zugeordnet ist.

8. Verwendung nach Anspruch 6 oder 7, wobei jeder Bearbeitungsstation in der Bearbeitungseinrichtung eine eigene Schreib- und Leseeinrichtung (SLG) zugeordnet ist.

## Claims

1. Data-processing device having
a) at least one stationary (TR, MF1) read/write device (SLG) for cableless data transmission (SE; SF1, SF), and
b) at least one autonomous data-storage device (MDS) with an internal memory (DS), having
b1) a processing unit (DÜV) for cableless data exchange (SF3, SF) between the internal memory (DS) and the read/write device (SLG),
b2) a detector (DK; SF2, SF) which responds when the data-storage device (MDS) enters the transmission field (SF) of the read/write device (SLG), and
b3) means for the supply of power to the detector (DK) and/or processing unit (DÜV),
**characterized in that** the power-supply means are:
b3.1) a first battery (B1) for the supply of power to the detector (DK) and
b3.2) a switchable supply circuit (VS) consisting of a second battery (B2) with a switching device (S) which is activated as a result of the response of the detector (DK) and connects at least the processing unit (DÜV) to the second battery (B2) at least for the duration of a data exchange (SF) with the read/write device (SLG).

2. Device according to claim 1, wherein
a) the detector (DK) generates a pulse (SL) for the activation of the switching device (S), and
b) the switching device (S) remains switched on in a self-holding mode for the duration of a data exchange (SF) between the processing unit (DÜV) and the read/write device (SLG) and is subsequently automatically deactivated.

3. Device according to claim 1 or 2, wherein the internal memory (DS) is connected (A2) to the first battery (B1) when closed-circuit current is required in order to preserve data.

4. Device according to one of the preceding claims, wherein the at least one read/write device (SLG) is coupled (AK) to a higher-level master computer which is used for central data management.

5. Method for operating a data processing device according to one of the preceding claims, wherein
a) the at least one read/write device (SLG) cyclically sends a start data telegram as long as no data-storage device (MDS) is located in the transmission field (SF),
b) the detector (DK) in the at least one data-storage device (MDS) responds upon entry into the transmission field (SF), and
c) the processing unit (DÜV) after connection to the second battery (B2) by means of the detector (DK) and the switching device (S) evaluates the start data telegram and signals the readiness for data exchange to the transmitting and receiving device (SLG) by transmission of a recognition data telegram.

6. Use of a data processing device according to one of claims 1 to 4 for characterising workpieces at least according to the type and current state of machining at the beginning of and during the run through a machining device.

7. Use according to claim 6, wherein associated with each work piece (W) for the run through the machining device there is a data-storage device (MDS) that is peculiar thereto.

8. Use according to claim 6 or 7, wherein associated with each machining station in the machining device there is a read/write device (SLG) that is peculiar thereto.

## Revendications

1. Dispositif de traitement de données, comportant
a) au moins un dispositif d'écriture et de lecture (SLG) à poste fixe (TR, MF1) pour la transmission de données sans fil (SE; SF1, SF), et
b) au moins un dispositif de mémorisation de données (MDS) autonome avec mémoire interne (DS), comportant
b1) une unité de traitement (DÜV) pour l'échange de données sans fil (SF3, SF) entre mémoire interne (DS) et dispositif d'écriture et de lecture (SLG),
b2) un détecteur (DK; SF2, SF) qui réagit lors de i'entrée du dispositif de mémorisation de données (MDS) dans le champ de transmission (SF) du dispositif d'écriture et de lecture (SLG), et
b3) des moyens pour l'alimentation en courant du détecteur (DK) et/ou de l'unité de traitement (DÜV),
**caractérisé par le fait que** les moyens pour l'alimentation en courant sont:
b3.1) une première pile (B1) pour l'alimentation en courant du détecteur (DK) et
b3.2) un circuit de courant d'alimentation commutable (VS) qui est composé d'une deuxième pile (B2) avec un dispositif commutateur (S), qui est activé par la réaction du détecteur (DK) et qui connecte au moins l'unité de traitement (DÜV) à la deuxième pile (B2) au moins pour la durée d'un échange de données (SF) avec le dispositif d'écriture et de lecture (SLG).

2. Dispositif selon la revendication 1, dans lequel
a) le détecteur (DK) produit une impulsion (SL) pour l'activation du dispositif commutateur (S), et
b) le dispositif commutateur (S) reste connecté en auto-entretien pour la durée d'un échange de données (SF) entre l'unité de traitement (DÜV) et le dispositif d'écriture et de lecture (SLG) et se désactive ensuite automatiquement.

3. Dispositif selon la revendication 1 ou 2, dans lequel la mémoire interne (DS) est raccordée (A2) à la première pile (B1) si elle a besoin d'un courant de repos pour la conservation de données.

4. Dispositif selon l'une des revendications précédentes, dans lequel le dispositif d'écriture et de lecture (SLG) - il y en a au moins un - est raccordé (AK) à un ordinateur de contrôle de rang supérieur qui sert à la gestion centrale de données.

5. Procédé pour l'exploitation d'un dispositif de traitement de données selon l'une des revendications précédentes, dans lequel
a) le dispositif d'écriture et de lecture (SLG) - il y en a au moins un - émet de façon cyclique un télégramme de données de début tant qu'il n'y a pas de dispositif de mémorisation de données (MDS) dans le champ de transmission (SF),
b) le détecteur (DK) dans le dispositif de mémorisation de données (MDS) - il y en a au moins un - réagit lors de l'entrée dans le champ de transmission (SF), et
c) l'unité de traitement (DÜV) après la connexion à la deuxième pile (B2) au moyen du détecteur (DK) et du dispositif commutateur (S) évalue le télégramme de données de début et signale au dispositif d'émission et de réception (SE) par la transmission d'un télégramme de données de reconnaissance que tout est prêt pour l'échange de données.

6. Utilisation d'un dispositif de traitement de données selon l'une des revendications 1 à 4 pour la caractérisation de pièces au moins quant au type et à l'état d'usinage actuel au début et au cours du passage à travers un dispositif d'usinage.

7. Utilisation selon la revendication 6, dans laquelle un dispositif de mémorisation de données (MDS) particulier est associé à chaque pièce (W) pour le passage à travers le dispositif d'usinage.

8. Utilisation selon la revendication 6 ou 7, dans laquelle un dispositif d'écriture et de lecture (SLG) particulier est associé à chaque poste d'usinage dans le dispositif d'usinage.
